# EUROPÄISCHE PATENTSCHRIFT

(11) **EP 2 425 229 B1**
(45) Veröffentlichungstag und Bekanntmachung des Hinweises auf die Patenterteilung: **31.08.2016**
(21) Anmeldenummer: 10722567.4
(22) Anmeldetag: 14.04.2010
(51) Int. Cl.: G01N 21/27, G01N 21/39, G01N 21/35, G01N 21/61

(54) **ANSTEUER- UND AUSWERTESCHALTUNG, MESSGERÄT SOWIE VERFAHREN ZUM MESSEN DER KONZENTRATION EINES GASES**
CONTROL AND EVALUATION CIRCUIT, MEASURING DEVICE AND METHOD FOR MEASURING THE CONCENTRATION OF A GAS
CIRCUIT DE COMMANDE ET D'ÉVALUATION, APPAREIL DE MESURE, ET PROCÉDÉ POUR MESURER LA CONCENTRATION D'UN GAZ

(30) Priorität: 27.04.2009 DE 102009018620
(43) Veröffentlichungstag der Anmeldung: 07.03.2012
(73) Patentinhaber: CareFusion Germany 234 GmbH, 97204 Höchberg (DE)
(72) Erfinder: SCHERER, Helmut, 97204 Höchberg (DE); SCHRADER, Dieter, 97204 Höchberg (DE); MENNINGER, Stefan, 97204 Höchberg (DE)
(74) Vertreter: Hellmich, Wolfgang
(86) Internationale Anmeldenummer: PCT/DE2010/050018
(87) Internationale Veröffentlichungsnummer: WO 2010/124685

(56) Entgegenhaltungen:
- EP-A1- 1 111 372
- EP-A1- 1 475 618
- WO-A2-2008/079032
- GB-A- 2 412 728
- US-A- 5 184 017
- US-A- 6 091 504
- US-A- 6 150 661
- US-A1- 2006 044 562
- LAUE C K ET AL: "WAVELENGTH TUNING AND SPECTRAL PROPERTIES OF DISTRIBUTED FEEDBACK DIODE LASERS EITH A SHORT EXTERNAL OPTICAL CAVITY", APPLIED OPTICS, OPTICAL SOCIETY OF AMERICA, US LNKD- DOI:10.1364/AO.40.003051, Bd. 40, Nr. 18, 20. Juni 2001 (2001-06-20) , Seiten 3051-3059, XP001081159, ISSN: 0003-6935

## Beschreibung

Die Erfindung bezieht sich auf das Gebiet von Ansteuer- und Auswerteschaltungen der im Oberbegriff des Patentanspruchs 1 genannten Art, Messgeräte mit einer solchen Schaltung sowie Verfahren der im Oberbegriff des Patentanspruchs 7 genannten Art.

Die Erfindung bezieht sich auf die Bestimmung der Konzentration eines oder mehrerer Gase durch Transmissionsmessung. Insbesondere wird durch die Transmissionsmessung die Absorption einer Absorptionslinie des bzw. jedes Gases bestimmt und hieraus auf die Konzentration des beziehungsweise jedes der Gase geschlossen.

Im Stand der Technik sind verschiedene Messanordnungen und -verfahren bekannt, bei denen aufgrund der Absorption einer Absorptionslinie eines Gases auf die Konzentration des Gases in einem Messvolumen geschlossen wird. Im Prinzip können diese Verfahren auch zur Analyse von Gasgemischen verwendet werden, wobei für jedes Gas mindestens eine Messung in einer Absorptionslinie erfolgen muss und idealerweise jede Absorptionslinie in einem anderen Bereich des Lichtspektrums liegen sollte. Im folgenden werden wir uns auf die Bestimmung der Konzentration eines einzigen Gases, beispielsweise O₂, CO₂, He oder N₂ in Luft beschränken. Bei Gasen, die natürlicherweise in nennenswerten Umfang in natürlicher Luft vorkommen, also O₂ und N₂, eventuell auch CO₂, wird unter Konzentration die absolut vorhandene Gasmenge verstanden. Medizintechnische Messverfahren, bei denen die Konzentration der oben genannten Gase gemessen wird, sind u. a. in der EP 1772098 A1 (VI11P) beschrieben.

Kürzlich sind durchstimmbare Halbleiterlaser auf den Markt gekommen, deren Linienbreite deutlich schmaler als die typische Absorptionslinie eines hier interessierenden Gases von ca 1 nm ist, und deren Laserlinie um mehr als 1 nm durch die Stärke des durch den Halbleiterlaser fließenden Stromes verändert werden kann. Die Veränderung der Laserlinie ist insbesondere über eine Änderung des Brechungsindex auf eine höhere Temperatur des Halbleiterkristallszurückzuführen. Die Brechungsindexänderung hat einen ca 20-fach stärkeren Einfluss auf die Wellenlänge als die Änderung der räumlichen Ausdehnung des Halbleiterkristalls bei gleicher Temperaturänderung. Solche Halbleiterlaser werden für Analysen in der Raumfahrt, insbesondere bei Expedition im zu anderen Planeten, eingesetzt. Um die Absorption des zu messenden Gases zu bestimmen, muss die stark nichtlineare Kennlinie des Halbleiterlasers durch einen Fit aus den Messpunkten herausgerechnet werden. Ein solches Verfahren ist aus der US 2006/0044562 A1 bekannt, wobei die Kennlinie des Halbleiterlasers durch eine Gerade angenähert wird.

Ein ähnliches Verfahren ist aus der US 6,091,504 bekannt. Allerdings arbeitet dieses Verfahren mit zwei Detektoren. Ein Strahlteiler lenkt einen Teil des Laserlichts auf einen ersten Detektor. Der andere Teil des Laserlichts wird durch eine Gasprobenzeile auf einen zweiten Detektor gelenkt. Beide Detektorsignale werden einer Kompensationsschaltung zugeführt, die die Trägerwellenform (Sägezahn) entfernt, mit der der Halbleiterlaser angesteuert wird, der das Laserlicht erzeugt. Ein ähnliches Verfahren mit 2 Detektoren ist aus der US 6,150,661 bekannt. Ein weiterer, ähnlicher Gasdetektor ist aus der WO 2008/079032 A2 bekannt. Dabei wird das Signal zur Ansteuerung der Laser durch eine Addition von drei Signalen mittels eines Operationsverstärkers erzeugt. Die ersten beiden Signale, nämlich ein Sinus- und Dreieckssignal werden mittels direkter digitaler Synthese erzeugt. Das dritte Signal ist ein Geichspannungsoffset, der von einem Digital-Analog-Wandler oder Pulsweitenmodulator unter Steuerung eines Mikroprozessors erzeugt wird.

Die EP 1 475 618 A1 offenbart ein Wellenlängen-Modulations-Spektroskopie-System. Die Frequenz eines Lasers wird mit einer sinusförmigen Grundwelle moduliert.
Durch Wechselwirkung mit einer Gasprobe wird die Frequenzmodulation teilweise in Amplitudenmodulation umgewandelt. Man misst bei einer Oberwelle der Grundwelle, weil dort der Laser weniger rauscht. Um kostengünstige, weniger lineare Laser einsetzen zu können, wird die sinusförmige Grundwelle durch Addition einer Oberwelle vorverzerrt.

Es ist Aufgabe der Erfindung eine Ansteuer- und Auswerteschaltung sowie ein entsprechendes Verfahren anzugeben, das auf irdische Verhältnisse abgestimmt ist.

Diese Aufgabe wird durch den Gegenstand der unabhängigen Ansprüche gelöst.

Insbesondere wird die Aufgabe dadurch gelöst, dass ein Referenzsignal von dem von einer Fotodiode aufgenommenen Transmissionssignal abgezogen wird. Hierdurch wird die nichtlineare Kennlinie des Halbleiterlasers auf überraschend einfache Weise kompensiert. Das möglicherweise geringfügig höhere Gewicht spielt 5 auf der Erde keine Rolle.

Bevorzugte Ausführungsformen der Erfindung sind Gegenstand der Unteransprüche.

Erfindungsgemäß wird zur Speicherung einer Kennlinie ein digitaler Speicher eingesetzt.

Aufgrund der guten Dynamik und einfachen Bauweise von analogen Subtrahierern wird die Subtraktion des Transmissionssignals vom Referenzsignal analog durchgeführt. Der hierfür erforderliche Digital-Analog-Wandler ist billiger als ein entsprechender Analog-Digital-Wandler und stellt somit kein gewichtiges Argument gegen eine analoge Subtraktion dar.

Eine analoge Addition eines Offsets zu dem von einem zweiten Digital-Analog-Wandler gelieferten Signals zur Erzeugung eines analogen Signals zur Ansteuerung des Halbleiterlasers hält den Dynamikbereich und damit die Kosten des zweiten Digital-Analog-Wandlers gering.

Die Adressleitungen des digitalen Speichers zur Speicherung einer Kennlinie können in vorteilhafter Weise mit den digitalen Eingängen des zweiten Digital-Analog-Wandlers verbunden sein. Dies reduziert die Komplexität der erforderlichen Steuersignale.

Ein symmetrisches Sägezahnsignal an den digitalen Eingängen des zweiten Digital-Analog-Wandlers sorgt für eine gleichmäßige Erwärmung und Abkühlung des Halbleiterkristalls des Lasers und damit für ein gleichmäßiges Durchfahren der Absorptionslinie des zu messenden Gases.

Durch Integration des Ausgangssignal des Subtrahierers entweder über eine Periode des Treibersignals oder die Zeitdauer von einem Minimum bis zu einem Maximum des Treibersignals oder die Zeitdauer von einem Maximum bis zu einem Minimum des Treibersignals erhält man auf einfache Weise die Fläche unter der Absorptionslinie des zu messenden Gases und damit ein Maß für die Konzentration des zu messenden Gases.

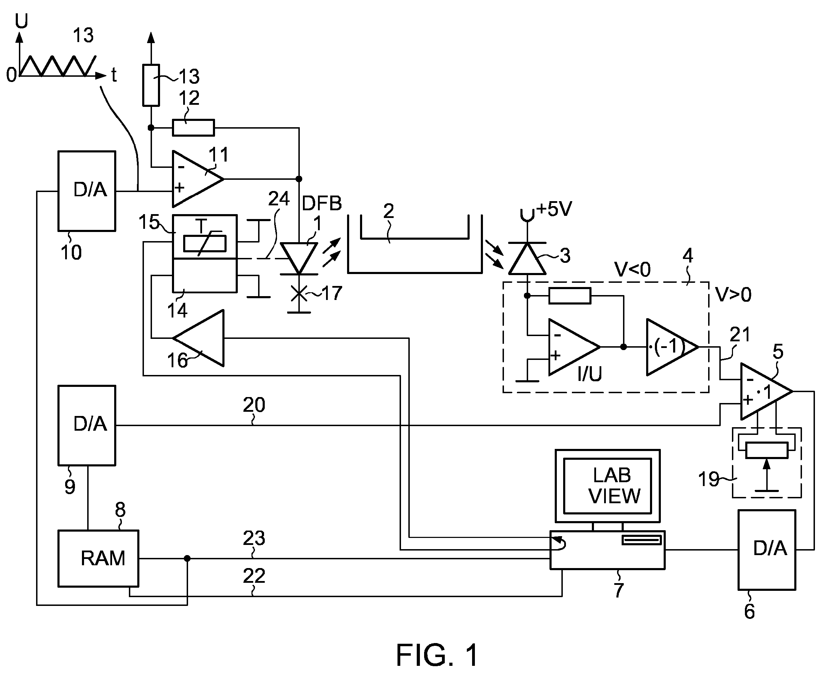

Im Folgenden wird eine bevorzugte Ausführungsform der Erfindung unter Bezugnahme auf die beiliegenden Zeichnungen näher erläutert. Dabei zeigt Fig. 1 einen Prinzipschaltplan der erfindungsgemäßen Ansteuer- und Auswerteschaltung.

Figur 1 zeigt einen Prinzipschaltplan der erfindungsgemäßen Ansteuer- und Auswerteschaltung. Das zu messende Gas befindet sich möglicherweise zusammen mit anderen Gasen in einer Küvette 2. Pneumatische Anschlüsse an der Küvette ermöglichen einen Gasaustausch in der Küvette 2. Licht im Bereich einer Absorptionslinie des zu messenden Gases wird durch einen DFB-Halbleiterlaser 1 (DFB: distributed feedback) erzeugt. Transmittiertes Licht wird durch eine Fotodiode 3 in einen elektrischen Strom gewandelt. Ein Strom-Spannungs-Wandler 4 wandelt den von der Fotodiode 3 gelieferten Strom in eine Spannung. Fachleuten ist bekannt, dass ein Strom-Spannung-Wandler 4 einen durch einen Widerstand rückgekoppelten Operationsverstärker und, falls erforderlich, einen Inverter enthalten kann. Das Ausgangssignal des Strom-Spannung-Wandlers 4 wird als Transmissionssignal 21 bezeichnet.

Ein Subtrahierer 5 subtrahiert das Transmissionssignal 21 von einem Referenzsignal 20. Der Subtrahierer liefert ein Differenzsignal, das einem Analog-Digital-Wandler 6 zugeführt wird. Der Analog-Digital-Wandler 6 tastet mit einer Frequenz von 5 bis 10 kHz ab. Der Subtrahierer 5 kann einen Offset-Abgleich 19 aufweisen, um den Dynamikbereich des Analog-Digital-Wandlers 6 optimal zu nutzen und die erforderliche Auflösung und damit die Kosten des Analog-Digital-Wandlers 6 gering zu halten. Das digitale Ausgangssignal des Analog-Digital-Wandlers 6 kann einem Computer 7 oder einem Mikroprozessor zugeführt werden.

Der Computer 7 oder ein Mikroprozessor erzeugt ein digitales Steuersignal, das sowohl den Adresseingängen des Speichers 8, als auch dem Digital-Analog-Wandler 10 zugeführt wird. Das Steuersignal hat beispielsweise einen periodischen, insbesondere symmetrischen, sägezahnförmigen zeitlichen Verlauf und eine Frequenz von 5 Hz. Der Digital-Analog-Wandler 10 erzeugt aus dem digitalen Steuersignal ein analoges Steuersignal, zu dem der Differenzverstärker 11 im Zusammenwirken mit den Widerständen 12 und 13 einen ersten Offset addiert. Dieser erste Offset stimmt den Halbleiterlaser 1 grob auf die zu messende Absorptionslinie ab, so dass der Halbleiterlaser 1 bei der minimalen Ausgangspannung des Digital-Analog-Wandlers 10 Licht mit einer Frequenz oberhalb der Absorptionslinie und bei maximaler Ausgangspannung des Digital-Analog-Wandlers 10 Licht mit einer Frequenz unterhalb der Absorptionslinie erzeugt. Man kann den ersten Offset auch so einstellen, dass bei einem Steuersignal gleich dem arithmetische Mittel aus minimalem und maximalem Steuersignal Laserlicht erzeugt wird, dessen Frequenz dem Maximum der Absorptionslinie entspricht. Auf diese Art und Weise wird die Dynamik des Digital-Analog-Wandlers 10 optimal genutzt. Im übrigen übernimmt der Differenzverstärker 11 auch die Funktion eines Leistungsverstärkers, so dass insbesondere genügend Strom für den Halbleiterlaser 1 zur Verfügung gestellt wird. Der Strom durch den Halbleiterlaser wird auch als Treibersignal 17 bezeichnet.

Bei einer Änderung des Stroms durch den Halbleiterlaser 1 ändert sich nicht nur die Frequenz des emittierten Lichts, was bei dieser Anwendung erwünscht ist, sondern es ändert sich auch die Intensität des emittierten Lichts, was irgendwie kompensiert werden muss. Erfindungsgemäß erfolgt diese Kompensation durch den Speicher 8. In den Speicherzellen des Speichers 8 sind geeignete Werte abgelegt, die dem Transmissionssignal 21 bei einer Nullkonzentration des zu messenden Gases entsprechen, so dass das Differenzsignal am Ausgang des Subtrahierers 5 möglichst null ist.

Unter Nullkonzentration kann die Konzentration verstanden werden, die das zu messende Gas in der Umgebungsluft hat. Diese Konzentration ist insbesondere für die Gase N₂ und O₂ ungleich null. Auch bei CO₂ kann es erforderlich sein, die etwa 0,04% Anteil in der Luft zu berücksichtigen. Diese Definition der Nullkonzentration ermöglicht eine einfache Kalibrierung des Geräts in der Umgebungsluft. Alternativ kann auch eine Gasflasche mit einem Gasgemisch bekannter Zusammensetzung oder eine Kalibrierküvette mit einem eingeschlossenen Testgas zur Kalibrierung verwendet werden.

Der Halbleiterlaser 1 (Hersteller: Nanoplus GmbH, Seriennummer 350/10-23) ist in einem TO5-Gehäuse mittels eines Mounts befestigt. Der Mount enthält ein Peltierelement 14 und einen Thermistor 15. Deshalb stehen das Peltierelement 14 und das Gehäuse des Halbleiterlasers 1 in thermischen Kontakt 24, der in der Figur 1 durch eine gestrichelte Linie dargestellt ist. Das Peltierelement wird von einem Treiber 16 angesteuert. In der in Figur 1 dargestellten Ausführungsform schließt der Computer 7 eine Rückkoppelschleife vom Thermistor 15 über den Treiber 16 zum Peltierelement 14, so dass die Temperatur des Mounts weit gehend konstant gehalten wird und damit insbesondere von Umgebungstemperaturschwankungen unbeeinflusst bleibt. Die Temperatur des Halbleiterlasers 1 selbst weicht von der Temperatur des Mounts je nach Höhe des Steuersignals mehr oder weniger ab.

Als Speicher 8 kann im Prinzip jeder herkömmliche Speicherbaustein verwendet werden. Allerdings ist ein reines ROM (Read Only Memory) unpraktisch, weil es keine Nachkalibrierung zulässt. Gut geeignet sind beschreibbare, nichtflüchtige Speicher wie beispielsweise EEPROMs (Electrically Erasable Programmable ROM). In der in Figur 1 dargestellten Ausführungsform wird sogar ein RAM (Random Access Memory) verwendet, in das bei jedem Einschaltvorgang (Booten) über die Datenleitung 22 die Speicherzellen neu geschrieben werden. Üblicherweise weist ein Computer 7 einen nichtflüchtigen Speicher wie beispielsweise eine Festplatte auf. Die Datenleitung 22 ermöglicht eine Nachkalibrierung.

Die Auswertung des Differenzsignals erfolgt durch Integration über das n-malige Durchfahren einer Absorptionslinie, wobei n eine natürliche Zahl (1, 2, 3, ...) ist und man ein Integralsignal erhält. Jede fallende und jede steigende Flanke des symmetrischen, sägezahnförmigen Steuersignals entspricht einem Durchfahren der Absorptionslinie. Es wird also über eine Zeit integriert, die eine oder mehrere steigenden oder/und fallenden Flanken des Steuersignals dauert. Dies kann analog durch einen Integrator erfolgen oder digital durch Aufsummieren der vom Analog-Digital-Wandler 6 gelieferten Abtastwerte. Letzteres ist in der in Figur 1 dargestellten Ausführungsform realisiert. Durch die Integration bzw. das Aufsummieren wird das Rauschen auf ein akzeptables Niveau gedrückt. Das Integralsignal weist eine gute Proportionalität zur Gaskonzentration, genauer zur Abweichung der Gaskonzentration von der Nullkonzentration auf.

Aufgrund der begrenzten Auflösung der Digital-Analog-Wandler 9 und 10 wird das Differenzsignal mindestens zwischen zwei Werten schwanken, die ±1/2 Bit der Auflösung der Digital-Analog-Wandler 9 und 10 entsprechen. Die beiden Werte können aufgrund der nichtlinearen Kennlinie des Halbleiterlasers 1 von der Höhe des digitalen Steuersignals abhängen. Die Genauigkeit kann bei sonst gleichen Parametern dadurch verbessert werden, dass die im Speicher 8 abgelegten Werte so berechnet werden, dass das Integralsignal möglichst auch nur um einen Wert schwankt, der ±1/2 Bit der Auflösung der Digital-Analog-Wandler 9 und 10 entspricht. An dieser Stelle braucht man nicht bescheiden sein und kann den Bereich des Steuersignals heranziehen, in dem ±1/2 Bit zu einem besonders geringen Differenzsignal führen. Für eine so exakte Kalibrierung wird man die Absorptionslinie deutlich öfter als bei einer normalen Messung durchfahren müssen, um das Rauschen weiter zu senken und die Reproduzierbarkeit zu erhöhen.

Bisher wurde die in Figur 1 dargestellte Ausführungsform nur zur Messung der O₂-Konzentration bei einer Wellenlänge von 760,26 nm eingesetzt. Es ist angedacht, Konzentrationen folgender Gase zu bestimmen: CO, O₂, CO₂, C₂H₂, CH₄, He, SF₆ und NO.

### Bezugszeichenliste

- 1: DFB-Laserdiode
- 2: Küvette
- 3: Fotodiode
- 4: Strom-Spannungs-Wandler
- 5: Subtrahierer
- 6: Analog-Digital-Wandler
- 7: Computer
- 8: Speicher
- 9: Digital-Analog-Wandler
- 10: Digital-Analog-Wandler
- 11: Differenzverstärker
- 12, 13: Widerstand
- 14: Peltierelement
- 15: Thermistor
- 16: Treiber
- 17: Treibersignal
- 19: Offset-Abgleich
- 20: Referenzsignal
- 21: Transmissionssignal (von Fotodiode)
- 22: Datenleitung
- 23: Steuersignal
- 24: thermischer Kontakt

## Patentansprüche

1. Ansteuer- und Auswerteschaltung für eine Laserdiode (1) und eine Fotodiode (3) zur Bestimmung der Konzentration eines Gases, wobei die Laserdiode geeignet ist, Licht im Bereich einer Absorptionslinie des Gases zu erzeugen, mit:
einem Treiber (10, 11, 12, 13) zur Erzeugung eines Stroms (17) für die Laserdiode (1), wobei der Treiber einen ersten Digital-Analog-Wandler (10) aufweist, der ein digitales Steuersignal (23) zur Erzeugung des Stroms (17) analog wandelt;
eine Baugruppe (8, 9) zur Erzeugung eines Referenzsignals (20); und
einem Subtrahierer (5) zum Subtrahieren des Referenzsignals (20) von dem von der Fotodiode gelieferten Signal (21);
**dadurch gekennzeichnet, dass**
die Baugruppe zur Erzeugung eines Referenzsignals (20) ferner umfasst:
einen digitalen Speicher (8) zur Speicherung einer Kennlinie, wobei die Kennlinie so gewählt ist, dass bei Nullkonzentration des Gases ein Differenzsignal am Ausgang des Subtrahierers (5) für alle während des Betriebs der Schaltung vorkommenden Werte des Steuersignals (23) null ist, wobei der digitale Speicher (8) elektrisch mit dem Eingang des ersten Digital-Analog-Wandler (10) verbunden ist, sodass dem digitalen Speicher (8) im Betrieb ebenfalls das digitale Steuersignal (23) zugeführt wird;
einem zweiten Digital-Analog-Wandler (9), der elektrisch so mit dem digitalen Speicher (8) verbunden ist, dass der zweite Digital-Analog-Wandler (9) aus dem digitalen Speicher (8) ausgelesene, digitale Werte erhält und der zweite Digital-Analog-Wandler (9) die erhaltenen Werte in das Referenzsignal (20) wandelt.

2. Schaltung gemäß Anspruch 1, **dadurch gekennzeichnet, dass** der Treiber ferner einen Addierer (11, 12, 13) umfasst, der so elektrisch mit dem ersten Digital-Analog-Wandler (10) verbunden ist, dass dem Addierer (11, 12,13) das analoge Ausgangssignal des ersten Digital-Analog-Wandlers (10) zugeführt wird und der Addierer (11, 12, 13) zu dem analogen Ausgangssignal des ersten Digital-Analog-Wandlers (10) einen ersten konstanten Offset addieren kann, wobei der Ausgang des Addierers (11, 12, 13) mit der Laserdiode (1) verbindbar ist.

3. Schaltung gemäß Anspruch 2, **dadurch gekennzeichnet, dass** die Adressleitungen des digitalen Speichers (8) elektrisch mit den digitalen Eingängen des ersten Digital-Analog-Wandlers (10) verbunden sind.

4. Schaltung gemäß Anspruch 2 oder 3, **dadurch gekennzeichnet, dass** ein Mikroprozessor (7) mit den digitalen Eingängen des ersten Digital-Analog-Wandlers (10) verbunden ist und an diesen ein symmetrisches Sägezahnsignal anlegen kann.

5. Schaltung gemäß einem der obigen Ansprüche, ferner **gekennzeichnet durch** einen Integrator (6, 7), der mit dem Ausgang des Subtrahierers (5) elektrisch verbunden ist, wobei der Integrator geeignet ist, das Ausgangssignal des Subtrahierers (5) entweder über eine Periode des Stroms (17) oder die Zeitdauer von einem Minimum bis zu einem Maximum des Stroms (17) oder die Zeitdauer von einem Maximum bis zu einem Minimum des Stroms (17) zu integrieren.

6. Messgerät zur Bestimmung der Konzentration eines Gases mit:
einer Küvette (2), die das Gas enthält;
eine durchstimmbare Laserdiode (1) zum Erzeugen von Licht im Bereich einer Absorptionslinie des Gases;
einer Fotodiode (3) zum Erfassen des durch das Gas in der Küvette (2) transmittierten Lichts; und
einer Schaltung gemäß einem der obigen Ansprüche, die elektrisch mit der Laserdiode (1) und der Fotodiode (3) verbunden ist.

7. Verfahren zum Messen der Konzentration eines Gases mit:
Analog-wandeln eines digitalen Steuersignals (23) in einem ersten Digital-Analog-Wandlers (10) um einen Strom (17) für eine Laserdiode (1) zu erzeugen;
Erzeugen von Licht in der Laserdiode (1) in einer Absorptionslinie des Gases, wobei die Wellenlänge des erzeugten Lichts von dem Strom (17) abhängt und die Intensität des erzeugten Lichts ebenfalls von dem Strom (17) abhängt;
Messen des durch einen räumlichen Bereich (2) transmittierten Lichts,
wobei sich in dem räumlichen Bereich das Gas befindet, wobei hierdurch ein Transmissionssignal (21) erzeugt wird; und
Subtrahieren eines Referenzsignals (20) von dem Transmissionssignal (21) durch einen analogen Subtrahierer (5), um ein Differenzsignal zu erhalten;
**gekennzeichnet durch**:
Führen des digitalen Steuersignals (23) zu einem digitalen Speicher (8);
Auslesen einer digitalen Darstellung des Referenzsignals (20) aus dem digitalen Speicher (8), wobei die digitale Darstellung des Referenzsignals (20) dem digitalen Steuersignal (23) zugeordnet ist und zu einer Kennlinie gehört,
wobei der digitale Speicher (8) die Kennlinie speichert, wobei die Kennlinie so gewählt ist, dass bei Nullkonzentration des Gases für alle vorkommenden Werte des Steuersignals (23) das Differenzsignal null ist; und
Analog-wandeln der digitalen Darstellung des Referenzsignals (20) in einem zweiten Digital-Analog-Wandler (9), um das Referenzsignal (20) zu erhalten.

8. Verfahren gemäß Anspruch 7, ferner **gekennzeichnet durch**:
Analoges Addieren (11, 12, 13) eines ersten konstanten Offsets zu einem analogen Ausgangssignal eines ersten Digital-Analog-Wandlers (10), um den Strom (17) zum Ansteuern der Laserdiode (1) zum Erzeugen des Lichts zu erhalten.

9. Verfahren gemäß Anspruch 8, ferner **gekennzeichnet durch**:
Führen des digitalen Steuersignals (23) auf den Adressleitungen zu dem digitalen Speicher (8) und auf den digitalen Eingängen des ersten Digital-Analog-Wandlers (10).

10. Verfahren gemäß Anspruch 8 oder 9, ferner **gekennzeichnet durch**:
Erzeugen eines symmetrischen Sägezahnsignals **durch** einen Mikroprozessor (7) an den digitalen Eingängen des ersten Digital-Analog-Wandlers (10).

11. Verfahren gemäß einem der Ansprüche 8 bis 10, ferner **gekennzeichnet durch**:
Integrieren (6, 7) des Differenzsignals entweder über eine Periode des Stroms (17) oder die Zeitdauer von einem Minimum bis zu einem Maximum des Stroms (17) oder die Zeitdauer von einem Maximum bis zu einem Minimum des Stroms (17).

## Claims

1. Control and evaluation circuit for a laser diode (1) and a photodiode (3) for determining the concentration of a gas, the laser diode being suitable to generate light in the range of an absorption line of the gas, comprising:
a driver (10, 11, 12, 13) for generating a current (17) for the laser diode (1), the driver comprising a first digital-analog converter (10) for analog-converting a digital control signal (23) for generating said current (17);
an assembly (8, 9) for generating a reference signal (20); and
a subtractor (5) for subtracting the reference signal (20) from the signal (21) supplied by the photodiode;
**characterized in that**
the assembly for generating a reference signal (20) further comprises:
a digital memory (8) for storing a characteristic, the characteristic being chosen, so that at zero concentration of the gas, a difference signal at the output of the subtractor (5) is zero for all values of the control signal (23) occurring during operation of the circuit, the digital memory (8) being electrically connected to the input of the first digital-analog converter (10), in such a way that during operation the digital control signal (23) is also supplied to the digital memory (8);
a second digital-analog converter (9) electrically connected to the digital memory (8) in such a way that the second digital-analog converter (9) receives digital values read out from the digital memory (8) and the second digital-analog converter (9) converts the received values into the reference signal (20).

2. Circuit according to claim 1, **characterized in that** the driver further comprises an adder (11, 12, 13), electrically connected to the first digital-analog converter (10) in such a way that the analog output signal of the first digital-analog converter (10) is supplied to the adder (11, 12, 13) and the adder (11, 12, 13) can add a first constant offset to the analog output signal of the first digital-analog converter (10), wherein the output of the adder (11, 12, 13) is connectable to the laser diode (1).

3. Circuit according to claim 2, **characterized in that** the address lines of the digital memory (8) are electrically connected to the digital inputs of the first digital-analog converter (10).

4. Circuit according to claim 2 or 3, **characterized in that** a microprocessor (7) is connected to the digital inputs of the first digital-analog converter (10) and can apply a symmetric sawtooth signal to the same.

5. Circuit according to one of the preceding claims, further **characterized by** an integrator (6, 7) electrically connected to the output of the subtractor (5), the integrator being suitable to integrate the output signal of the subractor (5) either over a period of the current (17) or the period from a minimum to a maximum of the current (17) or the period from a maximum to a minimum of the current (17).

6. Measuring device for determining the concentration of a gas comprising:
a cuvette (2) containing the gas
a tunable laser diode (1) for generating light in the range of an absorption line of the gas;
a photodiode (3) for detecting the light transmitted though the gas in the cuvette (2); and
a circuit according to one of the preceding claims, being electrically connected with the laser diode (1) and the photodiode (3).

7. Method for measuring the concentration of a gas, comprising:
analog-converting a digital control signal (23) in a first digital-analag converter (10) for generating a current (17) for a laser diode (1);
generating light in the laser diode (1) within an absorption line of the gas, wherein the wavelengh of the generated light depends on the current (17) and the intensity of the generated light also depends on the current (17);
measuring the light transmitted though a spatial region (2), wherein the gas is provided in the spatial region so that a transmission signal (21) is generated thereby; and
subtracting a reference signal (20) from the transmission signal (21) by an analog subtractor (5) so as to obtain a difference signal;
**characterized by**
providing the digital control signal (23) to a digital memory (8);
reading out a digital representation of the reference signal (20) from the digital memory, wherein the digital representation of the reference signal (20) is assigned to the digital control signal (23) und belongs to a characteristic,
the digital memory (8) storing the characteristic, the characteristic being chosen, so that at zero concentration of the gas, a difference signal at the output of the subtractor (5) is zero for all values of the control signal (23) occurring during operation of the circuit; and
analog-converting the digital representation of the reference signal (20) in a second digital-analog converter (9) so as to obtain the reference signal (20).

8. Method according to claim 7, further **characterized by**:
adding in an analog manner (11, 12, 13) a first constant offset to an analog output signal of a first digital-analog converter (10), so as to obtain the current (17) for driving a laser diode (1) to generate the light.

9. Method according to claim 8, further **characterized by**:
providing the digital control signal (23) to the address lines to the digital memory (8) and to the digital inputs of the second digital-analog converter (10).

10. Method according to claim 8 or 9, further **characterized by**:
generating a symmetric sawtooth signal by a microprocessor (7) at the digital inputs of the second digital-analog converter (10).

11. Method according to one of claims 8 to 10, further **characterized by**:
integrating (6, 7) the difference signal either over a period of the current (17) or the period from a minimum to a maximum of the current (17) or the period from a maximum to a minimum of the current (17).

## Revendications

1. Circuit de commande et d'évaluation pour une diode laser (1) et une photodiode (3) pour déterminer la concentration d'un gaz, la diode laser étant adaptée pour produire de la lumière dans la plage d'une ligne d'absorption du gaz, avec :
un pilote (10, 11, 12, 13) pour produire un courant (17) pour la diode laser (1), le pilote comportant un premier convertisseur numérique-analogique (10) convertissant en analogique un signal de commande numérique (23) pour produire le courant (17) ;
un module (8, 9) pour produire un signal de référence (20) ; et
un soustracteur (5) pour soustraire le signal de référence (20) au signal (21) fourni par la photodiode;
**caractérisé en ce que** :
le module pour produire un signal de référence (20) comprend en outre:
une mémoire numérique (8) pour mémoriser une courbe caractéristique, la courbe caractéristique étant sélectionnée de telle sorte qu'en cas de concentration nulle du gaz, un signal différentiel est nul à la sortie du soustracteur (5) pour toutes les valeurs du signal de commande (23) se produisant pendant le fonctionnement du circuit, la mémoire numérique (8) étant reliée électriquement à l'entrée du premier convertisseur numérique-analogique (10), de sorte que le signal de commande numérique (23) est également amené à la mémoire numérique (8) en fonctionnement ;
un deuxième convertisseur numérique-analogique (9) est relié électriquement de telle sorte à la mémoire numérique (8) que le deuxième convertisseur numérique-analogique (9) tire de la mémoire numérique (8) les valeurs numériques collectées et que le deuxième convertisseur numérique-analogique (9) convertit les valeurs obtenues en signal de référence (20).

2. Circuit selon la revendication 1, **caractérisé en ce que** le pilote comprend en outre un additionneur (11, 12, 13) relié électriquement de telle sorte au premier convertisseur numérique-analogique (10) que le signal de sortie analogique du premier convertisseur numérique-analogique (10) est amené à l'additionneur (11, 12,13) et que l'additionneur (11, 12, 13) peut ajouter au signal de sortie analogique du premier convertisseur numérique-analogique (10) un premier décalage constant, la sortie de l'additionneur (11, 12, 13) pouvant être reliée à la diode laser (1).

3. Circuit selon la revendication 2, **caractérisé en ce que** les lignes d'adresse de la mémoire numérique (8) sont reliées électriquement aux entrées numériques du premier convertisseur numérique-analogique (10).

4. Circuit selon la revendication 2 ou 3, **caractérisé en ce qu'**un microprocesseur (7) est relié aux entrées numériques du premier convertisseur numérique-analogique (10) et peut appliquer au niveau de celui-ci un signal en dents de scie symétrique.

5. Circuit selon l'une quelconque des revendications précédentes, **caractérisé en outre par** un intégrateur (6, 7) relié électriquement à la sortie du soustracteur (5), l'intégrateur étant adapté pour intégrer le signal de sortie du soustracteur (5) soit sur une période du courant (17) soit sur la durée allant d'un minimum à un maximum du courant (17) soit sur la durée allant d'un maximum à un minimum du courant (17).

6. Appareil de mesure pour déterminer la concentration d'un gaz avec :
une cuvette (2), contenant le gaz ;
une diode laser (1) à fréquences d'accord pour produire de la lumière dans la plage d'une ligne d'absorption du gaz ;
une photodiode (3) pour détecter la lumière transmise par le gaz contenu dans la cuvette (2) ; et
un circuit selon l'une quelconque des revendications précédentes, relié électriquement à la diode laser (1) et à la photodiode (3).

7. Procédé pour mesurer la concentration d'un gaz avec :
conversion analogique d'un signal de commande numérique (23) dans un premier convertisseur numérique-analogique (10) pour produire un courant (17) pour une diode laser (1);
production de lumière dans la diode laser (1) dans une ligne d'absorption du gaz, la longueur d'onde dépendant de la lumière produite par le courant (17) et l'intensité de la lumière produite dépendant également du courant (17) ;
mesure de la lumière transmise à travers une région (2) dans l'espace le gaz se trouvant dans cette région dans l'espace, un signal de transmission (21) étant produit à travers elle ; et
soustraction d'un signal de référence (20) à un signal de transmission (21) par le biais d'un soustracteur analogique (5), pour obtenir un signal différentiel;
**caractérisé par** :
amenée du signal de commande numérique (23) à une mémoire numérique (8) ;
collecte d'une représentation numérique du signal de référence (20) hors de la mémoire numérique (8) mise à jour, la représentation numérique du signal de référence (20) étant associée au signal de commande numérique (23) et appartenant à une courbe caractéristique ;
la mémoire numérique (8) mémorisant la courbe caractéristique, la courbe caractéristique étant sélectionnée de telle sorte qu'en cas de concentration nulle du gaz pour toutes les valeurs du signal de commande (23) se produisant, le signal différentiel est nul; et
conversion analogique de la représentation numérique du signal de référence (20) dans un deuxième convertisseur numérique-analogique (9), pour obtenir le signal de référence (20).

8. Procédé selon la revendication 7, **caractérisé en outre par**:
addition analogique (11, 12, 13) d'un premier décalage constant à un signal de sortie analogique d'un premier convertisseur numérique-analogique (10), pour obtenir le courant (17) servant à commander la diode laser (1) en vue de produire la lumière.

9. Procédé selon la revendication 8, **caractérisé en outre par**:
amenée du signal de commande numérique (23) sur les lignes d'adresse jusqu'à la mémoire numérique (8) et sur les entrées numériques du premier convertisseur numérique-analogique (10).

10. Procédé selon la revendication 8 ou 9, **caractérisé en outre par**:
production d'un signal en dents de scie symétrique par le biais d'un microprocesseur (7) au niveau des entrées numériques du premier convertisseur numérique-analogique (10).

11. Procédé selon l'une quelconque des revendications 8 à 10, **caractérisé en outre par** :
intégration (6, 7) du signal différentiel soit sur une période du courant (17) soit sur la durée allant d'un minimum à un maximum du courant (17) soit sur la durée allant d'un maximum à un minimum du courant (17).
